# EUROPÄISCHE PATENTANMELDUNG

(11) **EP 3 929 677 A1**
(43) Veröffentlichungstag der Anmeldung: **29.12.2021**
(21) Anmeldenummer: 20182022.2
(22) Anmeldetag: 24.06.2020
(51) Int. Cl.: G05B 19/404

(54) **SCHWINGUNGSDÄMPFUNGSSYSTEM UND WERKZEUGMASCHINE**

(71) Anmelder: Siemens Aktiengesellschaft, 80333 München (DE)
(72) Erfinder: Bretschneider, Jochen, 88696 Owingen (DE); Schür, Torsten, 91058 Erlangen (DE); Schäfers, Elmar, 90763 Fürth (DE)

(57) **Zusammenfassung**

Die Erfindung betrifft eine Werkzeugmaschine umfassend zumindest ein Maschinenelement (4), zumindest einen aktiven Schwingungsdämpfer (40) und eine Schwingungssensoreinrichtung (41,42), wobei
der zumindest eine Schwingungsdämpfer (40) an einem Bereich (44) der Werkzeugmaschine (1) zur Dämpfung einer Schwingung des Maschinenelements (4) angeordnet ist, wobei die Schwingungssensoreinrichtung (41,42) dazu angeordnet ist, die Schwingung des Maschinenelements (4) an einer ersten Stelle (44) und an einer zweiten Stelle (45) der Werkzeugmaschine (1) zu erfassen, wobei
die zu erfassende Schwingung des Maschinenelements (4) an der zweiten Stelle (45) kleiner als an der ersten Stelle (44) ist, wobei
der zumindest eine aktive Schwingungsdämpfer (40) dazu eingerichtet ist, die Schwingung des Maschinenelements (4) abhängig von einer Abweichung zwischen einem ersten mittels der Schwingungssensoreinrichtung an der ersten Stelle (44) erfassten Istwert (S1) und einem zweiten mittels der Schwingungssensoreinrichtung an der zweiten Stelle (45) erfassten Istwert (S2) zu dämpfen.

## Beschreibung

Die Erfindung betrifft eine Werkzeugmaschine und ein Schwingungsdämpfungssystem.

Werkzeugmaschinen mit Dämpfungssystemen zur Dämpfung von im Betrieb der Maschinen entstehen Schwingungen sind im Stand der Technik hinlänglich bekannt.

EP 3 017 911 A1, EP 3 241 647 A1, EP 3 511 112 A1 und US 6 296 093 B1 z.B. zeigen Systeme zum Erfassen und zum Dämpfen von Schwingungen, die nahe am Tool-Center-Point (TCP) messbar und störend sind. Bisher werden diese Systeme zur Unterdrückung von Schwingungen bei der Schwerzerspanung, d.h. in der Regel bei konstanter Verfahrgeschwindigkeit des Bearbeitungswerkzeuges, z.B. eines Fräsers eingesetzt.

Bei niederfrequenten (meist kleiner als 100 Hz) Bewegungen (z.B. bei Fräs-Feinbearbeitung (Schlichten)) sind solche Systeme ineffizient und führen oft zu einem deutlichen Überschwingen am TCP. Aus diesem Grund wird heute die aktive Schwingungsdämpfung bei der Feinbearbeitung deaktiviert.

Die Aufgabe der vorliegenden Erfindung kann somit darin gesehen werden, Werkzeugmaschinen und Schwingungsdämpfungssysteme für Werkzeugmaschinen derart weiterzubilden, dass beim Abfahren einer beliebigen Bahn niederfrequente Schwingungen der Maschine zuverlässig gedämpft werden können.

Die vorgenannte Aufgabe wird mit einer Werkzeugmaschine der eingangs genannten Art erfindungsgemäß dadurch gelöst, dass die Werkzeugmaschine zumindest ein Maschinenelement, zumindest einen aktiven Schwingungsdämpfer und eine Schwingungssensoreinrichtung umfasst, wobei der zumindest eine Schwingungsdämpfer an einem Bereich der Werkzeugmaschine zur Dämpfung einer Schwingung des Maschinenelements angeordnet ist, wobei die Schwingungssensoreinrichtung dazu angeordnet ist, die (vorgenannte) Schwingung des Maschinenelements an einer ersten Stelle und an einer zweiten Stelle der Werkzeugmaschine zu erfassen, wobei die zu erfassende Schwingung des Maschinenelements an der zweiten Stelle kleiner als an der ersten Stelle ist, wobei der zumindest eine aktive Schwingungsdämpfer dazu eingerichtet ist, die Schwingung des Maschinenelements abhängig von einer Abweichung zwischen einem ersten mittels der Schwingungssensoreinrichtung an der ersten Stelle erfassten Istwert und einem zweiten mittels der Schwingungssensoreinrichtung an der zweiten Stelle erfassten Istwert zu dämpfen.

Aktive Schwingungsdämpfer enthalten aktiv angesteuerte Elemente, über die direkt eine Kraftwirkung auf das entsprechende Maschinenelement ausgeübt werden kann. Im Betrieb der Werkzeugmaschine wird der entsprechende aktive Schwingungsdämpfer auch aktiv angesteuert.

Der zumindest eine aktive Schwingungsdämpfer und die Schwingungssensoreinrichtung bilden ein autarkes (nicht an eine Werkzeugmaschinensteuerung angeschlossenes) Schwingungsdämpfungssystem.

Das zumindest eine Maschinenelement ist vorzugsweise lagegeregelt in zumindest eine Richtung verfahrbar. Die Schwingung kann mehrere Schwingungsmoden umfassen. Die Schwingungsmoden können zweidimensional oder/ und eine Torsion sein. Die Richtung, in der das zumindest eine Maschinenelement verfahrbar ist, kann beispielsweise orthogonal zu der Ebene der zweidimensionalen Schwingungsmoden sein.

Der Schwingungsdämpfer ist beispielsweise zur Dämpfung einer während der beispielsweise spanenden Bearbeitung eines Werkstücks durch ein Werkzeug in dem Maschinenelement auftretenden Vibration eingerichtet und ist dort angeordnet, wo die Vibration gedämpft werden soll - z.B. am TCP oder an einer anderen Stelle der Werkzeugmaschine, an der die Vibration ausgeprägt ist, d.h. erfassbar ist und vorzugsweise eine Amplitude aufweist, die in etwa gleich der maximalen Amplitude der Schwingungsmode ist.

Die zweite Stelle ist von der ersten Stelle unterschiedlich. Die zweite Stelle ist derart gewählt, dass die an der zweiten Stelle zu erfassende Schwingung nur kleiner als die an der ersten Stelle zu erfassende Schwingung sein kann. Insbesondere ist die Schwingung an der zweiten Stelle nicht messbar, d.h. die erfassbare Schwingung ist gleich Null.

Vorzugsweise ist die Schwingung an der ersten Stelle in etwa gleich groß, wie die Schwingung in dem Bereich, in welchem der Schwingungsdämpfer angeordnet ist.

Bei der erfindungsgemäßen Werkzeugmaschine ist eine Dämpfung der niedrigen Eigenfrequenzen möglich. Somit ist die erfindungsgemäße Werkzeugmaschine dazu ausgebildet, dass beim Schlichten ein höherer Ruck in den Antrieben der Maschinenachsen, beispielsweise ein Ruck zwischen etwa 15m/s³ und etwa 40m/s³, insbesondere ein Ruck von etwa 30m/s³ gefahren werden kann. Dadurch kann die Produktivität gesteigert werden.

Die Werkzeugmaschine kann beispielsweise als eine Fräsmaschine, eine Drehmaschine oder Laserbearbeitungsmaschine ausgebildet sein.

Bei einer Ausführungsform kann vorgesehen sein, das die Schwingungssensoreinrichtung einen ersten Schwingungssensor und einen zweiten Schwingungssensor umfasst, wobei der erste Schwingungssensor an der ersten Stelle angeordnet, beispielsweise montiert/angebracht ist und der zweite Schwingungssensor an der zweiten Stelle angeordnet ist.

Darüber hinaus kann mit Vorteil vorgesehen sein, dass sich die erste Stelle in dem Bereich befindet und der erste Schwingungssensor und der zumindest eine aktive Schwingungsdämpfer als eine Baueinheit ausgebildet sind.

Außerdem kann es zweckmäßig sein, wenn die erste Stelle ein Schwingungsbauch ist und/oder die zweite Stelle ein Schwingungsknoten ist.

Bei einer Ausführungsform kann vorgesehen sein, dass der Bereich einen Bearbeitungskopf umfasst.

Dabei kann es zweckdienlich sein, wenn der Bereich als jenes Ende eines Tragarms des Maschinenelements ausgebildet ist, an dem der Bearbeitungskopf angeordnet ist.

Darüber hinaus kann es vorgesehen sein, dass das Maschinenelement in einer ersten Richtung verfahrbar ist und die Schwingung in mindestens einer zweiten Richtung verlaufen kann, wobei die erste Richtung orthogonal zu der mindestens einen zweiten Richtung ist.

Bei einer Ausführungsform kann mit Vorteil vorgesehen sein, dass der zumindest eine aktive Schwingungsdämpfer mit einer Regelungseinheit ausgestattet ist, die dazu eingerichtet ist, die Abweichung zu errechnen und den aktiven Schwingungsdämpfer entsprechend der errechneten Abweichung zu steuern.

Außerdem kann es vorgesehen sein, dass das Maschinenelement die erste Stelle, die zweite Stelle und den Bereich aufweist.

Die vorgenannte Aufgabe wird auch mit einem eingangs genannten Schwingungsdämpfungssystem für eine Werkzeugmaschine, wobei die Werkzeugmaschine zumindest ein Maschinenelement umfasst, erfindungsgemäß dadurch gelöst, dass das Schwingungsdämpfungssystem zumindest einen aktiven Schwingungsdämpfer und eine Schwingungssensoreinrichtung aufweist, wobei der zumindest eine aktive Schwingungsdämpfer zur Dämpfung einer Schwingung an einem Bereich der Werkzeugmaschine ausgebildet ist, wobei die Schwingungssensoreinrichtung dazu eingerichtet und ausgebildet ist, die Schwingung des Maschinenelements an einer ersten Stelle und an einer zweiten Stelle der Werkzeugmaschine zu erfassen, wobei der zumindest eine aktive Schwingungsdämpfer dazu eingerichtet ist, die Schwingung des Maschinenelements abhängig von einer Abweichung zwischen einem ersten mittels der Schwingungssensoreinrichtung an der ersten Stelle erfassten Istwert und einem zweiten mittels der Schwingungssensoreinrichtung an der zweiten Stelle erfassten Istwert zu dämpfen.

Die vorgenannte Schwingung ist nur an dem TCP ausgeprägt und beispielsweise sichtbar. Diese Schwingung kann auch an anderen Stellen beziehungsweise Teilen der Werkzeugmaschine ausgeprägt und beispielsweise sichtbar sein. Der aktive Schwingungsdämpfer ist an einem Bereich angeordnet, an dem die Schwingung ausgeprägt ist. Die Schwingungssensoreinrichtung misst die Schwingung an mindestens zwei Stellen der Werkzeugmaschine, wobei die Schwingung an der ersten Stelle ausgeprägt und an der zweiten Stelle nicht beziehungsweise kaum ausgeprägt ist. Die erste Stelle kann, wie bereits erwähnt in dem Bereich liegen, in dem der Schwingungsdämpfer angebracht ist. Der Schwingungsdämpfer und die Schwingungssensoreinrichtung können (müssen aber nicht) beide an demselben Maschinenelement angeordnet sein. Beispielsweise kann der aktive Schwingungsdämpfer werkstückseitig, d.h. auf einem werkstückseitigen Maschinenelement angebracht sein.

Zusammengefasst wird dem erfindungsgemäßen Schwingungsdämpfungssystem nicht nur ein Istwert von jener Stelle der Werkzeugmaschine zugeführt, an der die Dämpfung der Schwingung des (verfahrbaren) Maschinenelements erreicht werden soll, sondern auch ein Istwert von einer Stelle der Werkzeugmaschine, wo die Schwingung des (verfahrbaren) Maschinenelements nicht oder nur wenig sichtbar ist, z.B. von einem Schwingungsknoten.

Somit ist der Schwingungsdämpfungssystem autark und ist nicht von einer Information der CNC Steuerung oder einem Regelungsalgorithmus abhängig, der die Antriebe der Werkzeugmaschine mit Lagesollwerten versorgt beziehungsweise diese regelt, um die Maschinenelemente zu verfahren. D.h. das Schwingungsdämpfungssystem muss nicht an einer CNC-Steuerung angeschlossen sein.

Die Integration und Verrechnung der Sensorsignale findet lokal im Steuer-/Regelgerät des aktiven Schwingungsdämpfers statt, ohne Notwendigkeit einer Schnittstelle zur CNC-Steuerung. Das bedeutet, dass das Dämpfungssystem auch ohne Informationen zur gewünschten Sollbewegung von der Steuerung immer aktiv sein kann, da die Sollwerte - verkörpert durch das Signal von dem ersten Schwingungssensor - durch Messung an geeigneter Stelle ermittelt werden. Damit kann das aktive Schwingungsdämpfungssystem autark von der an der Maschine eingesetzten Steuerung immer wirken, egal welchen Prozess die Maschine gerade ausführt (Schlichten, Schruppen, etc.).

Im Folgenden wird die Erfindung anhand der in den Figuren dargestellten Ausführungsbeispiele näher beschrieben und erläutert. Darin zeigen schematisch:
- FIG 1: eine Fräsmaschine,
- FIG 2: Eingangssignal eines Dämpfungsträgers, und
- FIG 3: von zwei Schwingungssensoren gemessene Geschwindigkeiten.

In den Ausführungsbeispielen und Figuren können gleiche oder gleich wirkende Elemente jeweils mit den gleichen Bezugszeichen versehen sein.

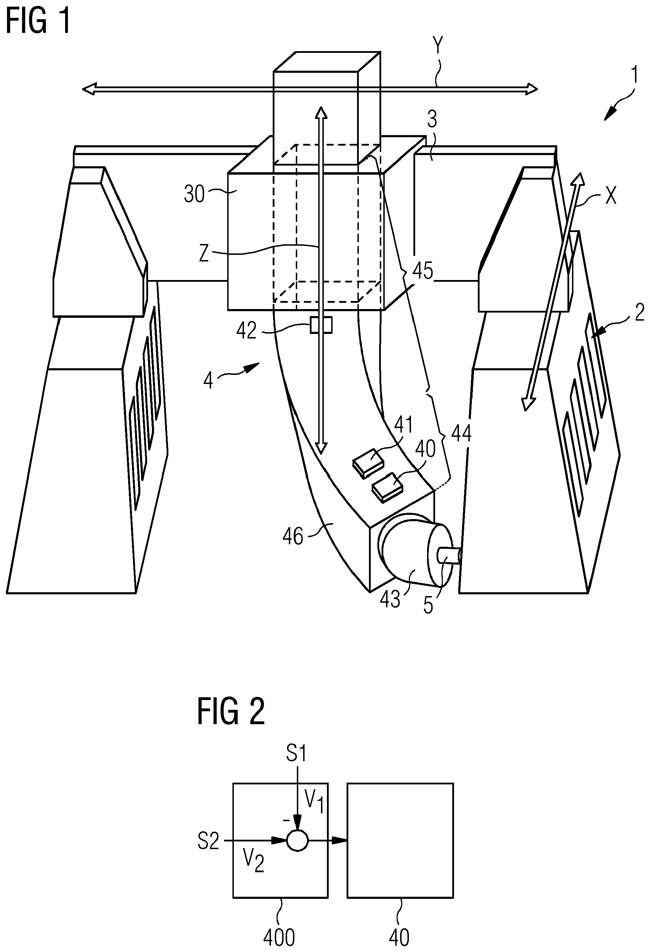

FIG 1 zeigt eine mögliche Ausführungsform einer erfindungsgemäßen Werkzeugmaschine - eine Fräsmaschine 1. Die Fräsmaschine 1 weist ein auskragendes Element 4 auf, das von einem Schlitten 30 getragen wird. Das auskragende Element 4 ist in dem Schlitten 30 mittels eines hier nicht gezeigten Antriebs lagegeregelt in zumindest eine hier vertikale Richtung Z verfahrbar. Der Schlitten 30 ist an einem Portal der Fräsmaschine 1 angeordnet. Das Portal umfasst ein feststehendes Maschinenelement 2 und ein bewegliches Brückenelement 3. Der Schlitten 30 ist mittels eines hier nicht gezeigten Antriebs lagegeregelt in zumindest einer Richtung Y - einer Längsrichtung des Brückenelements 3 - verfahrbar. Das Brückenelement 3 ist mittels eines hier nicht gezeigten Antriebs lagegeregelt in zumindest einer Richtung X - einer Längsrichtung des feststehenden Maschinen Elements 2 - verfahrbar.

Das auskragende Element 4 weist einen Tragarm auf, der als eine beispielsweise im Querschnitt quadratische Ramme 46 ausgebildet ist, und einen Bearbeitungskopf 43 mit einem darin befestigten Bearbeitungswerkzeug 5 auf. Das auskragende Element 4 weist einen ersten und einen zweiten Bereich 44 und 45. Der Bearbeitungskopf 43 ist in dem ersten Bereich 44 des auskragenden Elements 4 angeordnet. Die Bereiche 44 und 45 sind voneinander unterschiedlich und umfassen vorzugsweise unterschiedliche Längsabschnitte des auskragenden Elements 4.

Im Betrieb der Fräsmaschine 1, beispielsweise während die beweglichen Maschinenelemente 3, 30, 4 verfahren werden oder während ein hier nicht gezeigtes Werkstück mit dem Bearbeitungswerkzeug 5 bearbeitet wird, entstehen Schwingungen.

Die Schwingungen können eine oder mehrere Schwingungsmoden umfassen, die an einem Tool-Center-Point, d.h. meist an einem Bearbeitung Ende des Bearbeitungswerkzeugs 5, ausgeprägt, z.B. sichtbar sind. Solche Schwingungsmoden können unerwünscht sein, weil sie sich beispielsweise negativ auf Produktivität, zum Beispiel durch einen erhöhten Werkzeugverschleiß und/oder Qualität, zum Beispiel durch ungenaue Bearbeitung des Werkstücks auswirken und/oder für ein zu hohes Geräuschniveau verantwortlich sind. Dabei kann es sich z.B. um transversale Schwingungsmoden handeln.

Die Schwingungsmoden sind nicht nur an dem Tool-Center-Point ausgeprägt. Sie können an einem (oder mehreren) Maschinenelement(en) 2, 3, 30, 4 erfassbar sein. Die Schwingungsmoden können zwei oder mehr Schwingungsbäuche und/oder Schwingungsknoten aufweisen.

Zur Dämpfung der mindestens einen (unerwünschten) Schwingungsmode ist ein Schwingungsdämpfungssystem vorgesehen. Das Schwingungsdämpfungssystem umfasst zumindest einen aktiven Schwingungsdämpfer 40 und eine Schwingungssensoreinrichtung. Die in Fig 1 gezeigte Schwingungssensoreinrichtung weist einen ersten Schwingungssensor 41 und einen zweiten Schwingungssensor 42 auf.

Der Schwingungsdämpfer 40 ist in dem ersten Bereich 44 des auskragenden Maschinenelements 4 montiert. Fig 1 zeigt eine Montage des Schwingungsdämpfers 40 an der Ramme 46. Eine Montage des Schwingungsdämpfers 40 am Bearbeitungskopf 43 ist ebenfalls denkbar. Des Weiteren ist eine Montage des Schwingungsdämpfers an einem anderen Maschinenelement, z.B. an dem Schlitten 30, an dem Brückenelement 3 oder an dem Portal möglich, solange dort die Schwingungsmode ausgeprägt ist und deshalb effektiv gedämpft werden kann.

Der erste Schwingungssensor 41 ist an einer ersten Stelle angeordnet, die sich in dem ersten Bereich 44 befindet. Es ist denkbar, dass der erste Schwingungssensor 41 in dem oder an dem Schwingungsdämpfer 40 angebracht ist. Der zweite Schwingungssensor 42 ist an einer ersten Stelle angeordnet, die sich innerhalb des zweiten Bereichs 45 befindet.

Der aktive Schwingungsdämpfer 40 ist zur Dämpfung einer beispielsweise an dem Tool-Center-Point störenden Schwingungsmode ausgebildet. Der erste Schwingungssensor 41 ist zum Erfassen dieser Schwingungsmode in dem ersten Bereich 44 eingerichtet; der zweite Schwingungssensor 42 ist zum Erfassen der Schwingungsmode in dem zweiten Bereich 45 eingerichtet. Der erste Schwingungssensor 41 kann an einer anderen Stelle der Fräsmaschine 1 angeordnet sein, an der die Schwingung ausgeprägt ist, z.B. an dem Schlitten 30, an dem Brückenelement 3 oder an dem Portal. Die zweite Stelle, an der der zweite Schwingungssensor angebracht ist, schwingt weniger als die erste Stelle. Vorzugsweise ist die Schwingung an der zweiten Stelle kaum messbar, insbesondere gleich Null ist.

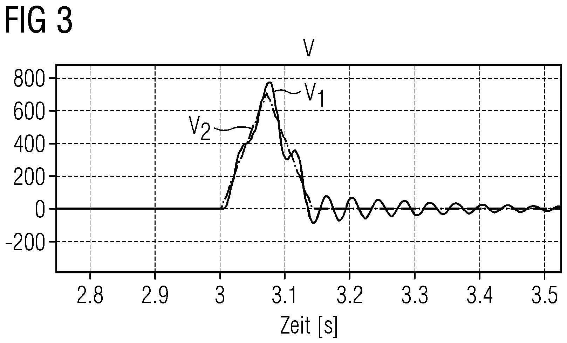

Die Schwingungssensoren 41 und 42 können dabei beispielsweise entsprechende Geschwindigkeiten oder Beschleunigungen erfassen (siehe FIG 3) und diese in Form von Signalen S1, S2 an eine Regelungseinheit 400 senden, mit der der Schwingungsdämpfer 40 ausgestattet ist. Der Dämpfungsregler 400 ist dazu eingerichtet, eine Abweichung zwischen den Signalen S1 und S2 zu errechnen und den aktiven Schwingungsdämpfer 40 entsprechend der errechneten Abweichung zu steuern (siehe FIG 2).

In FIG 1 ist die Regelungseinheit 400 nicht gezeigt. Die Regelungseinheit 400 kann beispielsweise in einem Schaltschrank außerhalb der Fräsmaschine 1 angeordnet und mit dem aktiven Schwingungsdämpfer 40 mittels eines Kabels verbunden sein.

Der aktive Schwingungsdämpfer 40 ist somit dazu eingerichtet, die Schwingungsmode abhängig von der Abweichung zwischen einem ersten mittels des ersten Schwingungssensors 41 in dem ersten Bereich 44 erfassten Signal S1 (erster Istwert der Schwingungsmode) und einem zweiten mittels des zweiten Schwingungssensors 42 in dem zweiten Bereich 44 erfassten Signal S2 (zweiter Istwert der Schwingungsmode) zu dämpfen.

Die zweite Stelle ist so gewählt, dass dort die Schwingungsmode weniger als an der ersten Stelle ausgeprägt ist. Dies ist durch Fig 1 verdeutlicht, die eine übertrieben große Auslenkung des auskragenden Elements 4 zeigt. Somit kann die von dem zweiten Schwingungssensor 42 erfasste Schwingung als Sollwert für den aktiven Schwingungsdämpfer 40 verwendet werden. In diesem Fall ist das Dämpfungssystem autark und muss nicht an einer Steuerungseinheit, beispielsweise CNC-Steuerung, angeschlossen werden, die Sollwerte für die Steuerung des aktiven Schwingungsdämpfers 40 errechnen würde.

Vorzugsweise umfasst der zweite Bereich 45 einen Schwingungsknoten der Schwingungsmode. In diesem Fall kann es zweckdienlich sein, wenn der zweite Schwingungssensor 42 an dem Schwingungsknoten angeordnet ist.

Der aktive Schwingungsdämpfer 40 kann beispielsweise mit einem Leistungskabel versorgt werden. Innen drin kann der aktive Schwingungsdämpfer 40 einen Linearmotor und einen zur Kommutierung des verbauten Linearmotors eingerichteten Sensor umfassen. Das Sensorkabel wird wie die Leistungskabel in den Schaltschrank geführt. Die vorgenannte Regelung des aktiven Schwingungsdämpfers kann im Schaltschrank geschehen.

Der erste Schwingungssensor 41 und der aktive Schwingungsdämpfer 40 sind als getrennte Baueinheiten ausgebildet. Der erste Schwingungssensor 41 kann allerdings auch in dem aktiven Schwingungsdämpfer 40 angeordnet sein.

Zusammenfassend veranschaulicht FIG 1, dass der erste Schwingungssensor 41 die zu dämpfende Schwingung "sieht", wobei der zweite, vorzugsweise in einem Schwingungsknoten angeordnete Schwingungssensor 42 die Schwingung kaum oder gar nicht sieht. Der zweite Schwingungssensor 42 verkörpert somit den anzustrebenden Sollwert für die Messstelle, an der der erste Schwingungssensor 41 angebracht ist. FIG 2 zeigt, wie die gemessenen Signale in der Regelung des aktiven Schwingungsdämpfers 40 verrechnet werden können - S2 als Sollwert, S1 als Regelgröße. Das Messsignal kann eine Geschwindigkeit sein oder eine Beschleunigung. Somit wird die Abweichung zwischen den beiden Sensoren geregelt. Dabei wird der Sollwert bereits/automatisch berücksichtigt. FIG 3 zeigt beispielhaft den Verlauf von Geschwindigkeiten, die an dem zweiten Schwingungssensor 42 und an ersten Schwingungssensor 41 gemessen werden. Die Schwingung ist vorzugsweise wie in FIG 3 nur am Signal S1 zu erkennen, und das Signal S2 dem Geschwindigkeitssollwert entspricht.

Die vorhin beschriebene Schwingungsmode kann zwei- oder auch dreidimensional sein.

Die in Zusammenhang mit der vorliegenden Erfindung betrachteten, zu dämpfenden Schwingungsmoden weisen vorzugsweise eine niedrige Frequenz, beispielsweise kleiner als etwa 100 Hz, insbesondere zwischen etwa 50 Hz und etwa 70 Hz auf.

Obwohl die Erfindung im Detail durch Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen. Beispielsweise findet die Erfindung auch bei anderen Arten der Werkzeugmaschinen (Laserschneiden, 3D-Druck-Robotern) ihre Anwendung.

## Patentansprüche

1. Werkzeugmaschine umfassend zumindest ein Maschinenelement (4), zumindest einen aktiven Schwingungsdämpfer (40) und eine Schwingungssensoreinrichtung (41,42), wobei
der zumindest eine Schwingungsdämpfer (40) an einem Bereich (44) der Werkzeugmaschine (1) zur Dämpfung einer Schwingung des Maschinenelements (4) angeordnet ist, wobei die Schwingungssensoreinrichtung (41,42) dazu angeordnet ist, die Schwingung des Maschinenelements (4) an einer ersten Stelle (44) und an einer zweiten Stelle (45) der Werkzeugmaschine (1) zu erfassen, wobei
die zu erfassende Schwingung des Maschinenelements (4) an der zweiten Stelle (45) kleiner als an der ersten Stelle (44) ist, wobei
der zumindest eine aktive Schwingungsdämpfer (40) dazu eingerichtet ist, die Schwingung des Maschinenelements (4) abhängig von einer Abweichung zwischen einem ersten mittels der Schwingungssensoreinrichtung an der ersten Stelle (44) erfassten Istwert (S1) und einem zweiten mittels der Schwingungssensoreinrichtung an der zweiten Stelle (45) erfassten Istwert (S2) zu dämpfen.

2. Werkzeugmaschine nach Anspruch 1, wobei die Schwingungssensoreinrichtung einen ersten Schwingungssensor (41) und einen zweiten Schwingungssensor (42) umfasst, wobei der erste Schwingungssensor (41) an der ersten Stelle (44) angeordnet ist und der zweite Schwingungssensor (42) an der zweiten Stelle (45) angeordnet ist.

3. Werkzeugmaschine nach Anspruch 1 oder 2, wobei sich die erste Stelle (44) in dem Bereich (44) befindet und der erste Schwingungssensor (41) und der zumindest eine aktive Schwingungsdämpfer (40) als eine Baueinheit ausgebildet sind.

4. Werkzeugmaschine nach einem der Ansprüche 1 bis 3, wobei die erste Stelle (44) ein Schwingungsbauch ist und/oder die zweite Stelle (45) ein Schwingungsknoten ist.

5. Werkzeugmaschine nach einem der Ansprüche 1 bis 4, wobei der Bereich (44) einen Bearbeitungskopf (43) umfasst.

6. Werkzeugmaschine nach Anspruch 5, wobei der Bereich (44) als jenes Ende eines Tragarms (46) des Maschinenelements (4) ausgebildet ist, an dem der Bearbeitungskopf (43) angeordnet ist.

7. Werkzeugmaschine nach einem der Ansprüche 1 bis 6, wobei das Maschinenelement (4) in einer erste Richtung (Z) verfahrbar ist und die Schwingung in mindestens einer zweiten Richtung (X,Y) verlaufen kann, wobei die erste Richtung (Z) orthogonal zu der mindestens einen zweiten Richtung (X,Y) ist.

8. Werkzeugmaschine nach einem der Ansprüche 1 bis 7, wobei der zumindest eine aktive Schwingungsdämpfer (40) mit einer Regelungseinheit (400) ausgestattet ist, die dazu eingerichtet ist, die Abweichung zu errechnen und den aktiven Schwingungsdämpfer (40) entsprechend der errechneten Abweichung zu steuern.

9. Werkzeugmaschine nach einem der Ansprüche 1 bis 8, wobei das Maschinenelement (4) die erste Stelle (44), die zweite Stelle (45) und den Bereich (44) aufweist.

10. Schwingungsdämpfungssystem für eine Werkzeugmaschine, wobei die Werkzeugmaschine (1) zumindest ein Maschinenelement (4) umfasst, wobei
das Schwingungsdämpfungssystem zumindest einen aktiven Schwingungsdämpfer (40) und eine Schwingungssensoreinrichtung (41,42) aufweist, wobei
der zumindest eine Schwingungsdämpfer (40) zur Dämpfung einer Schwingung an einem Bereich (44) des Maschinenelements (4) ausgebildet ist, wobei
die Schwingungssensoreinrichtung (41,42) dazu eingerichtet und ausgebildet ist, die Schwingung des Maschinenelements (4) an einer ersten Stelle (44) und an einer zweiten Stelle (45) des Maschinenelements (4) zu erfassen, wobei
der zumindest eine aktive Schwingungsdämpfer (40) dazu eingerichtet ist, die Schwingung des Maschinenelements (4) abhängig von einer Abweichung zwischen einem ersten mittels der Schwingungssensoreinrichtung an der ersten Stelle (44) erfassten Istwert (S1) und einem zweiten mittels der Schwingungssensoreinrichtung an der zweiten Stelle (45) erfassten Istwert (S2) zu dämpfen.
